# EUROPÄISCHE PATENTANMELDUNG

(11) **EP 1 757 352 A2**
(43) Veröffentlichungstag der Anmeldung: **28.02.2007**
(21) Anmeldenummer: 06016178.3
(22) Anmeldetag: 03.08.2006
(51) Int. Cl.: B01D 53/26, F25D 9/00

(54) **Kühlvorrichtung zur Erzeugung eines kalten Gasstromes**

(30) Priorität: 22.08.2005 DE 102005039795
(71) Anmelder: Bruker BioSpin AG, 8117 Fällanden (CH)
(72) Erfinder: Mayer, Markus, 8625 Gossau (CH); Guidoulianov, Jevgeni, 8610 Uster (CH); Durst, Roger, Middleton, WI 53562 (US)
(74) Vertreter: Kohler Schmid Möbus

(57) **Zusammenfassung**

Eine Kühlvorrichtung zur Erzeugung eines kalten Gasstromes mit einer Gasquelle und mindestens einem ersten Wärmetauscher (4) mit einem eingangsseitigen Anschluss (14b) und einem ausgangsseitigen Anschluss (15b), der mittels einer Kältequelle (10) gekühlt ist, ist dadurch gekennzeichnet, dass die Kühlvorrichtung mindestens einen zweiten Wärmetauscher (5) mit einem eingangsseitigen Anschluss (14a) und einem ausgangsseitigen Anschluss (15a) umfasst, wobei der erste Wärmetauscher (4) und der zweite Wärmetauscher (5) in einem evakuierten Behälter (11) angeordnet sind und parallel arbeiten, wobei der erste Wärmetauscher (4) und der zweite Wärmetauscher (5) durch ihre ausgangsseitigen Anschlüsse (15a, 15b) mit einer gemeinsamen Ausgangsleitung (8) verbunden sind, in die sie abwechselnd einen gereinigten Gasstrom liefern. Die erfindungsgemäße Kühlvorrichtung kann mit konventionellen Gasen und über einen langen Zeitraum störungsfrei betrieben werden.

## Beschreibung

Die Erfindung betrifft eine Kühlvorrichtung zur Erzeugung eines kalten Gasstromes mit einer Gasquelle und mindestens einem ersten Wärmetauscher mit einem eingangsseitigen Anschluss und einem ausgangsseitigen Anschluss, der mittels einer Kältequelle gekühlt ist.

Eine derartige Kühlvorrichtung ist beispielsweise aus JP 2004-069461 bekannt.

Bei verschiedenen Analyseverfahren ist es notwendig, die zu analysierenden Proben zu kühlen. In ausgewählten Fällen, wie der Magnetischen Kernresonanzspektroskopie oder der Röntgenkristallographie, geschieht dies dadurch, dass die Probe in einen kalten Gasstrom, vorzugsweise Stickstoff oder Helium gebracht wird.

Dieser kalte Gasstrom kann beispielsweise durch Verdampfen von Flüssiggasen realisiert werden, wie aus "Cryojet - Nitrogen jets for X-ray crystallography" von Oxford Instruments bekannt. Dabei muss jedoch eine aufwändige Logistik zur Beschaffung oder Erzeugung sowie zur Lagerung dieser Flüssiggase betrieben werden.

Bei dem in JP 2004-069461 beschriebenen Verfahren erfolgt die Erzeugung des kalten Gasstromes dadurch, dass ein warmes Gas mittels in Flüssiggas getauchten Wärmetauschern gekühlt wird. Alternativ dazu kann die Abkühlung des warmen Gases auch mittels Refrigeratoren durchgeführt werden. Dabei ergibt sich jedoch die Problematik, dass Verunreinigungen dieses Gases, typischerweise Wasserdampf oder Kohlendioxid, kondensieren und gefrieren und so die gasführenden Wärmetauscher und Leitungen nach einiger Betriebsdauer verstopfen. Es werden daher zur Vermeidung von Eisbildung der gasführenden Wärmetauscher und Leitungen äußerst reine Gase benötigt, welche nur mit großem konstruktiven Aufwand und wartungsintensiven Gasnachreinigungssystemen gewonnen werden können.

Aufgabe der vorliegendem Erfindung ist es, eine konstruktiv einfach aufgebaute Kühlvorrichtung vorzuschlagen, die mit konventionellen Gasen und trotzdem über einen langen Zeitraum störungsfrei betrieben werden kann

Diese Aufgabe wird erfindungsgemäß dadurch gelöst, dass die Kühlvorrichtung mindestens einen zweiten Wärmetauscher mit einem eingangsseitigen Anschluss und einem ausgangsseitigen Anschluss umfasst, wobei der erste und der zweite Wärmetauscher in einem evakuierten Behälter angeordnet sind und parallel arbeiten, wobei der erste und der zweite Wärmetauscher durch ihre ausgangsseitigen Anschlüsse mit einer gemeinsamen Ausgangsleitung verbunden sind, in die sie abwechselnd einen gereinigten Gasstrom liefern.

Bei der erfindungsgemäßen Kühlvorrichtung sind zwei Wärmetauscher vorgesehen, die parallel betrieben werden. Auf diese Weise ist es möglich, dass immer nur einer der Wärmetauscher einen reinen Gasstrom liefert, während der andere Wärmetauscher von kondensierten und gefrorenen Verunreinigungen durch Abscheiden dieser Verunreinigungen befreit wird. Die erfindungsgemäße Kühlvorrichtung ermöglicht dadurch die langfristige Erzeugung eines kontinuierlichen, gekühlten Gasstromes. Durch die Abscheidung der Verunreinigungen in den Wärmetauschern erfolgt gleichzeitig eine Nachreinigung des Gases. Die erfindungsgemäße Kühlvorrichtung kann somit auch als Gastrockungsgerät bis zu einem äußerst tiefen Taupunkt (bis etwa -200°C) dienen.

Vorzugsweise sind die ausgangsseitigen Anschlüsse der Wärmetauscher über einen Gasbehälter miteinander verbunden sind. Der Gasbehälter ist wiederum mit der Ausgangsleitung verbunden und beinhaltet das bereits durch die Wärmetauscher gekühlte, reine Gas, welches zur weiteren Verwendung dem Gasbehälter entnommen werden kann. Das gekühlte gereinigte Gas kann beispielsweise der Ausgangsleitung zugeführt werden, um eine Probe zu kühlen oder ein zu reinigender Wärmetauscher kann mit dem gereinigten Gas in umgekehrter Richtung durchflossen werden, um Verunreinigungen aus dem Wärmetauscher zu entfernen.

Für den Reinigungsprozess ist es von Vorteil, wenn zumindest einer der Wärmetauscher mit einer, vorzugsweise elektrischen, Heizung ausgestattet ist. Durch Beheizen des entsprechenden Wärmetauschers werden die kondensierten oder gefrorenen Restgase verdampft und können mittels eines Gasstroms ausgeschieden und entfernt werden.

Eine vorteilhafte Ausführungsform der Erfindung sieht vor, dass zwischen der Gasquelle und dem Behälter ein Ventil vorgesehen ist, das den Gasstrom zu den eingangsseitigen Anschlüssen der Wärmetauscher steuert.

Um das gereinigte und abgekühlte Gas auf die exakt gewünschte Temperatur zu bringen, ist es von Vorteil, wenn ein weiterer Wärmetauscher vorgesehen ist, der zwischen den ersten und zweiten Wärmetauschern und der Ausgangsleitung angeordnet ist.

Zur Kühlung der Wärmetauscher kann eine passive Kältequelle, insbesondere eine kryogene Flüssigkeit, z.B. flüssigen Stickstoff, vorgesehen sein.

Darüber hinaus besteht die Möglichkeit, dass eine aktive Kältequelle, insbesondere ein Refrigerator, z.B. einen Pulsrohrkühler, vorgesehen ist. Dies ist insofern vorteilhaft, weil bei der Verwendung eines Refrigerator kein Flüssiggas benötigt wird, dessen Beschaffung oder Erzeugung sowie Lagerung aufwändig wäre.

Die Vorteile der Erfindung kommen besonders gut zur Geltung, wenn die Kühlvorrichtung Teil einer Apparatur der magnetischen Kernresonanzspektroskopie oder Röntgenkristallographie ist, da hier oft eine zuverlässige und kontaminationsarme Kühlung der zu untersuchenden Probe notwendig ist.

Die Erfindung betrifft darüber hinaus ein Verfahren zur Herstellung eines kalten, gereinigten Gasstroms, wobei ein Gasstrom aus einer Gasquelle mindestens einem ersten Wärmetauscher, der durch eine Kältequelle gekühlt wird, durch einen eingangsseitigen Anschluss zugeführt wird, der Gasstrom im ersten Wärmetauscher abgekühlt und durch einen ausgangsseitigen Anschluss einer Ausgangsleitung zugeführt wird, wobei durch das Abkühlen des Gasstroms im ersten Wärmetauscher unerwünschte Gasteilchen ausgefroren werden. Der erste Wärmetauscher wird parallel mit mindestens einem zweiten kryogen gekühlten Wärmetauscher derart betrieben, dass in einem ersten Zeitabschnitt, in dem der Gasstrom aus der Gasquelle dem ersten Wärmetauscher zugeführt wird und im erster Wärmetauscher eine Reinigung des Gasstroms durch Ausfrieren unerwünschte Gasteilchen erfolgt, der zweite Wärmetauscher durch einen Aufwärmungsprozess gereinigt wird. In einem anschließenden zweiten Zeitabschnitt werden die Arbeitsweisen des ersten Wärmetauschers und zweiten Wärmetauschers vertauscht, wobei diese beiden Zeitabschnitte zyklisch wiederholt werden.

Jeder Arbeitszyklus besteht aus zwei Zeitabschnitten, die vorzugsweise gleich lang sind. Im ersten Zeitabschnitt wird der erste Wärmetauscher zur Kühlung und Lieferung des reinen Gases verwendet, während der zweite Wärmetauscher gereinigt wird, im zweiten Zeitabschnitt wird der zweite Wärmetauscher zur Kühlung und Lieferung des reinen Gases verwendet, während der erste Wärmetauscher gereinigt wird. Zur Umschaltung der Betriebsart zwischen den zwei Zeitabschnitten wird der Gasfluss in seiner Richtung durch ein 4/2-Wege-Ventil geändert. Die beiden Wärmetauscher bleiben dabei stets auf Betriebstemperatur und müssen zur Ausscheidung von kondensierten oder gefrorenen Restgasen nicht von der Kältequelle getrennt werden.

Vorzugsweise werden die gereinigten Gasströme vor Zuführung in die Ausgangsleitung in einem Gasbehälter zusammengefasst. Von diesem Gasbehälter aus kann das gereinigte Gas dann zur gewünschten Verwendung entnommen werden.

Die Reinigung eines der Wärmetauscher erfolgt bevorzugt derart, dass während des Aufwärmprozesses der entsprechende Wärmetauscher rückwärtig vom ausgangsseitigen Anschluss zum eingangsseitigen Anschluss mit einem Gasstrom durchströmt wird.

Vorzugsweise wird der zur Reinigung der Wärmetauscher verwendete Gasstrom dem Gasbehälter entnommen. Somit wird ein Eintrag von weiteren Verunreinigungen in die Wärmetauscher vermieden.

Um eine schnelle und individuelle Temperaturregelung des gereinigten Gasstroms zu erlauben, ist es vorteilhaft, wenn der gereinigte Gasstrom vor Zuführung in die Ausgangsleitung durch einen weiteren Wärmetauscher geleitet wird, wobei der weitere Wärmetauscher die Temperatur des Gasstromes auf einen gewünschten Wert regelt.

Vorzugsweise wird der von der Gasquelle ausgehende Gasstrom vor dem Eintritt in den evakuierten Behälter über ein Ventil gesteuert, das außerhalb des evakuierten Behälters angeordnet ist. Hierdurch entfällt die Notwendigkeit, ein kalt zu betätigendes Ventil (mit all seinen Nachteilen wie z. B. benötigte Vakuum-Dichtheit) im Vakuumbehälter zur Umschaltung des Gasstromes zu verwenden.

Weitere Vorteile der Erfindung ergeben sich aus der Beschreibung und der Zeichnung. Ebenso können die vorstehend genannten und die weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:

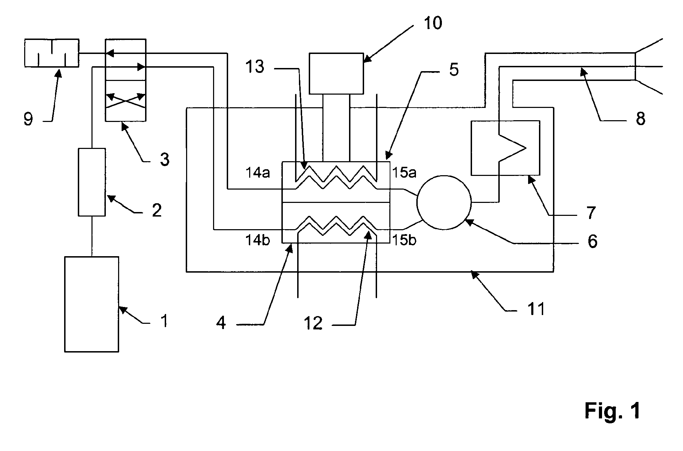

- Fig. 1: eine Ausführungsform der erfindungsgemäßen Kühlvorrichtung zur Erzeugung eines kalten gereinigten Gasstromes, die sich in einem ersten Zeitabschnitt eines erfindungsgemäßen zyklischen Kühlprozesses befindet.

Der Gasfluss durch die in **Fig. 1** gezeigte erfindungsgemäße Kühlvorrichtung beginnt bei der ölfreien Druckerzeugung in einem Kompressor **1** und führt über einen Gasseparator 2, beispielsweise einen Stickstoffseparator wie in Module Specification of SEPAREL MJ-G530 von Dainippon ink & chemicals, Inc., July 1, 1997 beschrieben, zur Separierung eines bestimmten Gases, vorzugsweise Stickstoff, aus der Druckluft. Anschließend wird das zu kühlende Gas mittels eines 4/2-WegeVentils **3** wechselweise in einem ersten Zeitabschnitt auf einen eingangsseitigen Anschluss **14b** eines ersten Wärmetauschers **4** und in einem zweiten Zeitabschnitt auf einen eingangsseitigen Anschluss **14a** eines zweiten Wärmetauschers **5** geleitet, in denen der Gasstrom abgekühlt wird. Hierdurch kondensieren und gefrieren Verunreinigungen im zu kühlenden Gasstrom, so dass gleichzeitig eine Reinigung des zu kühlenden Gasstroms erfolgt.

Durch ausgangsseitige Anschlüsse **15a, 15b** der Wärmetauscher 4, 5 wird das abgekühlte Gas in einem Gasbehälter **6** zusammengefasst und über einen geregelten Wärmetauscher **7** auf die gewünschte Austrittstemperatur erwärmt, von wo aus er durch eine vakuumisolierte Ausgangsleitung **8** zum Verwendungssort, z.B. zu einer zu kühlenden Probe, geführt wird.

Ein Teil des Gases im Gasbehälter 6 wird wechselweise vom Gasbehälter 6 durch den ersten Wärmetauscher 4 (zweiter Zeitabschnitt) oder den zweiten Wärmetauscher 5 (erster Zeitabschnitt), welcher in dem entsprechenden Zeitabschnitt gerade nicht zur Kühlung des zugeführten Gasstroms genutzt wird, zurück zum Ventil 3 geführt und durch einen Schalldämpfer **9** ausgeblasen. Gleichzeitig wird im anderen Wärmetauscher das Gas von der Gasquelle mittels eines Wärmeaustausch mit einer Kältequelle **10,** welche die Wärmetauscher 4, 5 kühlt, abgekühlt. Die drei Wärmetauscher 4, 5, 7 sowie der Gasbehälter 6 befinden sich in einem Vakuumbehälter **11** auf kryogener Temperatur.

Für die Reinigung der Wärmetauscher 4, 5 sind Heizwendel **12, 13** vorgesehen, welche beispielsweise in Wärmetauscherrohre eingebaut sein können und vorzugsweise elektrisch betrieben werden. Die elektrischen Anschlüsse der Heizwendeln **12, 13** können beispielsweise im Gasbehälter 6 angeordnet sein. Dadurch, dass zur Heizung eine vorzugsweise lose in das Wärmetauscherrohr eingebrachte Heizwendel verwendet wird, ist der Wärmeübergang zum Wärmetauscher sehr schlecht. Es wird daher im Wesentlichen nur das Gas und damit die festgefrorene Rückstände erwärmt, ohne dass der gesamte Wärmetauscher nennenswert erwärmt und die Kältequelle belastet wird. Insbesondere wird der jeweils andere, zum Kühlen des Gases verwendete Wärmetauscher nicht messbar beeinflusst. Die Wärmetauscher bleiben daher im Wesentlichen stets auf Betriebstemperatur.

Fig. 1 zeigt einen Betriebszustand der erfindungsgemäßen Kühlvorrichtung im ersten Zeitabschnitt, in dem der erste Wärmetauscher 4 vom Gasseparator 2 mit zu kühlendem Gas versorgt und der zweite Wärmetauscher 5 rückwärtig mit dem bereits gereinigten Gas aus dem Gasbehälter 6 durchströmt wird. Parallel dazu wird der zweite Wärmetauscher 5 während einer bestimmten Zeit innerhalb dieses Zeitabschnitts durch eine im oder am Wärmetauscher angeordneten Heizung 13 erwärmt, so dass die kondensierten und gefrorenen Verunreinigungen wieder verdampfen und mit dem Gasstrom aus dem Wärmetauscher ausgeströmt werden. Durch diese Abscheidung der Verunreinigungen wird ein Verstopfen der Leitungen im Wärmetauscher 5 verhindert.

Im zweiten Zeitabschnitt sind die Aufgaben der beiden Wärmetauscher 4, 5 vertauscht, so dass jeweils einer der Wärmetauscher 4, 5 einen kalten, gereinigten Gasstrom erzeugt, während der andere von Verunreinigungen befreit wird.

Die erfindungsgemäße Kühlvorrichtung weist einen besonders einfachen konstruktiven Aufbau auf, da keine im kalten Gasstrom arbeitenden Ventile benötigt werden. Trotzdem kann ein kontinuierlicher, kalter Gasstrahl über tausende von Stunden gewährleistet werden, so dass beispielsweise in der magnetischen Kernresonanzspektroskopie oder der Röntgenkristallographie Langzeitexperimente oder große Serien von Einzelexperimenten ohne Unterbruch durchgeführt werden können.

### Bezugszeichenliste

- **1**: Kompressor
- **2**: Gasseparator
- **3**: 4/2-Wegeventil
- **4**: erster Wärmetauscher
- **5**: zweiter Wärmetauscher
- **6**: Gasbehälter
- **7**: Wärmetauscher
- **8**: Vakuumisolierte Ausgangsleitung
- **9**: Schalldämpfer
- **10**: Kältequelle.
- **11**: Vakuumbehälter
- **12**: Heizwendel
- **13**: Heizwendel
- **14a**: eingangsseitiger Anschluss des zweiten Wärmetauschers
- **14b**: eingangsseitiger Anschluss des ersten Wärmetauschers
- **15a**: ausgangsseitiger Anschluss des zweiten Wärmetauschers
- **15b**: ausgangsseitiger Anschluss des ersten Wärmetauschers

## Patentansprüche

1. Kühlvorrichtung zur Erzeugung eines kalten Gasstromes mit einer Gasquelle und mindestens einem ersten Wärmetauscher (4) mit einem eingangsseitigen Anschluss (14b) und einem ausgangsseitigen Anschluss (15b), der mittels einer Kältequelle (10) gekühlt ist,
**dadurch gekennzeichnet, dass**
die Kühlvorrichtung mindestens einen zweiten Wärmetauscher (5) mit einem eingangsseitigen Anschluss (14a) und einem ausgangsseitigen Anschluss (15a) umfasst, wobei der erste Wärmetauscher (4) und der zweite Wärmetauscher (5) in einem evakuierten Behälter (11) angeordnet sind und parallel arbeiten, wobei der erste Wärmetauscher (4) und der zweite Wärmetauscher (5) durch ihre ausgangsseitigen Anschlüsse (15a, 15b) mit einer gemeinsamen Ausgangsleitung (8) verbunden sind, in die sie abwechselnd einen gereinigten Gasstrom liefern.

2. Kühlvorrichtung nach Anspruch 1, **dadurch gekennzeichnet, dass** die ausgangsseitigen Anschlüsse (15a; 15b) der Wärmetauscher (4; 5) über einen Gasbehälter (6) miteinander verbunden sind.

3. Kühlvorrichtung nach einem der vorhergehenden Ansprüche, **dadurch gekennzeichnet, dass** zumindest einer der Wärmetauscher (4, 5) mit einer, vorzugsweise elektrischen Heizung ausgestattet ist.

4. Kühlvorrichtung nach einem der vorhergehenden Ansprüche, **dadurch gekennzeichnet, dass** zwischen der Gasquelle und dem Behälter (6) ein Ventil (3) vorgesehen ist, das den Gasstrom zu den eingangsseitigen Anschlüssen (14a, 14b) der Wärmetauscher (4, 5) steuert.

5. Kühlvorrichtung nach einem der vorhergehenden Ansprüche, **dadurch gekennzeichnet, dass** ein weiterer Wärmetauscher (7) vorgesehen ist, der zwischen den ersten Wärmetauscher (4) und zweiten Wärmetauschern (5) und der Ausgangsleitung (8) angeordnet ist.

6. Kühlvorrichtung nach einem der Ansprüche 1 bis 5, **dadurch gekennzeichnet, dass** eine passive Kältequelle, insbesondere eine kryogene Flüssigkeit, z.B. flüssigen Stickstoff, vorgesehen ist.

7. Kühlvorrichtung nach einem der Ansprüche 1 bis 5, **dadurch gekennzeichnet, dass** eine aktive Kältequelle, insbesondere ein Refrigerator, z.B. einen Pulsrohrkühler, vorgesehen ist.

8. Kühlvorrichtung nach einem der vorhergehenden Ansprüche, **dadurch gekennzeichnet, dass** die Kühlvorrichtung Teil einer Apparatur der magnetischen Kernresonanzspektroskopie oder Röntgenkristallographie ist.

9. Verfahren zur Herstellung eines kalten, gereinigten Gasstroms, wobei ein Gasstrom aus einer Gasquelle mindestens einem ersten Wärmetauscher (4), der durch eine Kältequelle (10) gekühlt wird, durch einen eingangsseitigen Anschluss (14b) zugeführt wird, der Gasstrom im ersten Wärmetauscher (4) abgekühlt und durch einen ausgangsseitigen Anschluss (15b) einer Ausgangsleitung (8) zugeführt wird, wobei durch das Abkühlen des Gasstroms im ersten Wärmetauscher (4) unerwünschte Gasteilchen ausgefroren werden,
**dadurch gekennzeichnet, dass**
der erste Wärmetauscher (4) parallel mit mindestens einem zweiten kryogen gekühlten Wärmetauscher (5) derart betrieben wird, dass in einem ersten Zeitabschnitt, in dem der Gasstrom aus der Gasquelle dem ersten Wärmetauscher (4) zugeführt wird und im erster Wärmetauscher (4) eine Reinigung des Gasstroms durch Ausfrieren unerwünschte Gasteilchen erfolgt, der zweite Wärmetauscher (5) durch einen Aufwärmungsprozess gereinigt wird, und dass in einem anschließenden zweiten Zeitabschnitt die Arbeitsweisen des ersten Wärmetauschers (4) und zweiten Wärmetauschers (5) vertauscht werden, wobei diese beiden Zeitabschnitte zyklisch wiederholt werden.

10. Verfahren nach Anspruch 9, **dadurch gekennzeichnet, dass** die gereinigten Gasströme vor Zuführung in die Ausgangsleitung (8) in einem Gasbehälter (6) zusammengefasst werden.

11. Verfahren nach einem der Ansprüche 9 oder 10, **dadurch gekennzeichnet, dass** während des Aufwärmprozesses der entsprechende Wärmetauscher (4, 5) rückwärtig vom ausgangsseitigen Anschluss (15a, 15b) zum eingangsseitigen Anschluss (14a, 14b) mit einem Gasstrom durchströmt wird.

12. Verfahren nach Anspruch 11, **dadurch gekennzeichnet, dass** der zur Reinigung der Wärmetauscher (4, 5) verwendete Gasstrom dem Gasbehälter (6) entnommen wird.

13. Verfahren nach einem der Ansprüche 9 bis 12, **dadurch gekennzeichnet, dass** der gereinigte Gasstrom vor Zuführung in die Ausgangsleitung (8) durch einen weiteren Wärmetauscher (7) geleitet wird, wobei der weitere Wärmetauscher (7) die Temperatur des Gasstromes auf einen gewünschten Wert regelt.

14. Verfahren nach einem der Ansprüche 9 bis 13, **dadurch gekennzeichnet, dass** der von der Gasquelle ausgehende Gasstrom vor dem Eintritt in den evakuierten Behälter (11) über ein Ventil (3) gesteuert werden, das außerhalb des evakuierten Behälters (11) angeordnet ist.
